# EUROPEAN PATENT SPECIFICATION

(11) **EP 1 210 994 B1**
(45) Date of publication and mention of the grant of the patent: **22.02.2006**
(21) Application number: 01660214.6
(22) Date of filing: 21.11.2001
(51) Int. Cl.: B21D 3/02, B21D 1/02, B21D 1/05, B21D 3/05

(54) **Mounting and dismounting mechanism for a straightening or calibrating roller rotatable about a spindle and provided with a circular groove**
Befestigungs- und Demontierungsmechanismus für Richt- oder Kalibrierrolle drehbar um eine Spindel und versehen mit einer kreisförmigen Rille
Mécanisme de montage et de démontage d'un rouleau dresseur ou calibrateur rotatif autour d'un axe et pourvu d'une rainure cilindrique

(30) Priority: 24.11.2000 FI 20002582
(43) Date of publication of application: 05.06.2002
(73) Proprietor: T-DRILL OY, 66401 Laihia (FI)
(72) Inventor: Kiviranta, Risto, 66500 Vähäkyrö (FI); Lehto, Pertti, 66400 Laihia (FI)
(74) Representative: LEITZINGER OY

(56) References cited:
- EP-A- 0 472 765
- EP-A- 0 947 256
- GB-A- 774 342
- US-A- 2 806 508
- US-A- 3 985 013

## Description

The invention relates to a mounting and dismounting mechanism for a straightening or calibrating roller rotatable about a spindle and provided with a circular groove, comprising at least one holder element, the roller being adapted to be mountable and clampable by means of the holder element around the spindle, and to be dismountable and removable from around the spindle co-directionally with a longitudinal axis of the spindle.

The invention is applied in the process of straightening or calibrating a pipe, a shaft, or a wire, which involves a relatively large number of straightening or calibrating rollers for advancing a metal pipe or shaft therethrough. As the diameter of a pipe or a shaft changes, the straightening or calibrating mechanism must be refitted with rollers provided with a respectively dimensioned circular groove. The prior known mounting and dismounting mechanisms employ a nut or wedge attachment, the replacement of a roller requiring a tool. Since there are a large number of rollers to be replaced, the replacement of rollers is a tedious and awkward process.

It is an object of the invention to provide an improved mounting and dismounting mechanism, which enables a quick replacement of a roller by a single-handed grip without a tool.

This object is achieved on the basis of the characterizing features set forth in the appended claim 1.

The non-independent claims disclose preferred structural embodiments of the invention.

Another benefit gained by the invention is e.g. the fact that no components of the mounting mechanism has to be removed from the spindle or the mechanism.

One exemplary embodiment of the invention will now be described more closely in two different applications with reference made to the accompanying drawing, in which
- fig. 1: shows in an axial section a mounting and dismounting mechanism of the invention for a straightening or calibrating roller in an application, which comprises a bearing-fitted roller mounted on a stationary spindle; and
- fig. 2: shows the same mechanism in a second application, wherein the roller has its inner track mounted on a rotatably pivoted spindle.

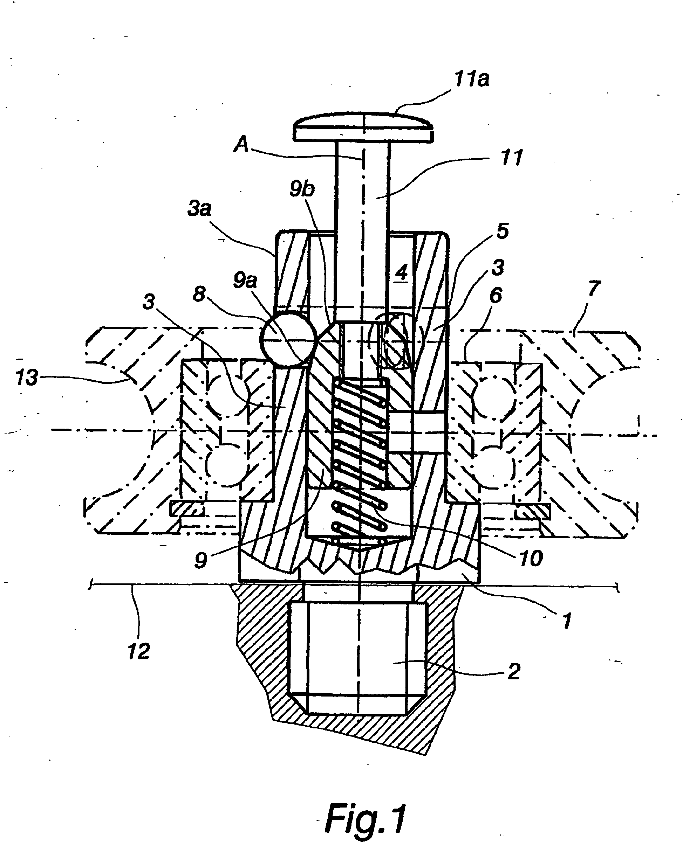

A straightening or calibrating roller 7 is provided with a circular groove 13, having a radius of curvature which is adapted to comply with that of the outer periphery of a pipe or a shaft to be straightened. The circular groove may also comprise a V-groove intended for straightening smaller diameter rods or metal wires, in which case a single groove is adaptable to a limited range of diameters. In the case of fig. 1, the roller 7 is provided with a bearing 6, which is adapted to be mounted about a spindle 1 and to be clamped in position by means of holder elements 8. In a release position of the holder elements 8, which will be described more closely hereinbelow, the bearing 6, along with its roller 7, is releasable and removable from around the spindle 1 co-directionally with a longitudinal axis A of the spindle 1.

The spindle 1 is formed with a cylindrical cavity 4, having its wall provided with three openings at a 120° angular spacing, the spherical holder elements 8 being adapted to move therein between clamping and release positions thereof, respectively protruding and not protruding from the outer surface of a spindle wall 3.

The cylindrical cavity 4 is provided with a piston type pusher 9 adapted to be movable between clamping and release positions thereof. These positions for the pusher 9 are axially spaced from each other. The pusher 9 has its distal end formed with a thrust face 9a, 9b at an acute angle relative to the longitudinal axis A of the spindle 1. In the illustrated case, the thrust face consists of a thrust face section 9a, which has a smaller angle and bears against the holder element 8 in a clamping position of the latter, and a thrust face section 9b, which has a larger angle and a function to reduce a displacement required for the pusher 9 between the clamping and release positions. The low-gradient ramp angle of the thrust face 9a provides for a sufficient retaining force for holding the ball 8 in its protrusive clamping position.

The force of a spring 10 urges the pusher 9 from its release position to the depicted damping position, the thrust face 9a, 9b of the pusher 9 using the force of the spring 10 to shift the holder element 8 from its release position to its clamping position. In the present case, the spring 10 comprises a compression spring, having a section of its length fitted in a cylindrical space formed within the pusher 9.

The pusher 9 is associated with a plunger 11, whereby the pusher 9 is movable against the force of the spring 10 from its damping position to its release position, the holder elements 8 being thus able to shift from the clamping position to the release position thereof. The plunger 11 comprises a push rod, extending from the cylindrical cavity 4 and having its end provided with an extension 11a which has a diameter smaller than the inner diameter of the bearing 6. This is necessary in order to fit the extension 11a through the central opening of the bearing 6 for replacing the roller 7. In the process of replacing a roller, its dismounting is effected simply by pressing the plunger 11 inwards with the palm, while gripping the groove 13 of the roller 7 with fingers for pulling the roller out of its position. Respectively, in the process of introducing a roller 7 onto a spindle, the plunger 11 is pushed inwards while pushing the roller 7 to its position. The spindle 1 has its end provided with a reduced diameter spindle extension 3a for bringing the bearing 6 smoothly around the spindle 1. Since there is a clearance fit between the inner diameter of the bearing 6 and the reduced-width spindle extension 3a, the roller 7 can be readily pushed along the length of the spindle extension 3. As progressive pushing is continued around the wall section 3 of the spindle 1, the reduced-width spindle extension 3a provides directional guidance for the roller 7 and thus facilitates mounting of the roller 7 around the cylindrical section 3 of the spindle 1 behind the holder elements 8 until one of the ends of the inner track of the bearing 6 responds to a collar present in the spindle 1.

In the illustrated case, the spindle 1 has a fastening head which comprises a screw tap 2 secured in a tapped hole in a mounting 12. The mounting 12 is a part of the straightening or calibrating mechanism. The fastening tap 2 may comprise e.g. a quadratic spindle, having its end provided with a flange, whereby the spindle can be inserted in an elongated recess formed in a plate functioning as the mounting 12 for bringing the flange to engage behind the plate.

In the process of assembling a mechanism of the invention, the holder balls 8 can be installed in position simply in such a way that, with the pusher 9 in a release position, the ball 8 is dropped from outside into an opening present in the wall 3 and then the outer edges of the opening are clenched such that the ball 8 can no longer squeeze out of the opening. The degree of clenching can be adjusted for selecting a maximal protrusion for the balls 8, which is slightly more prominent than that shown in the illustrated damping position.

The plunger 11 can be secured e.g. with a screw tap element present in its end into a tapped hole present in the distal end of the pusher 9.

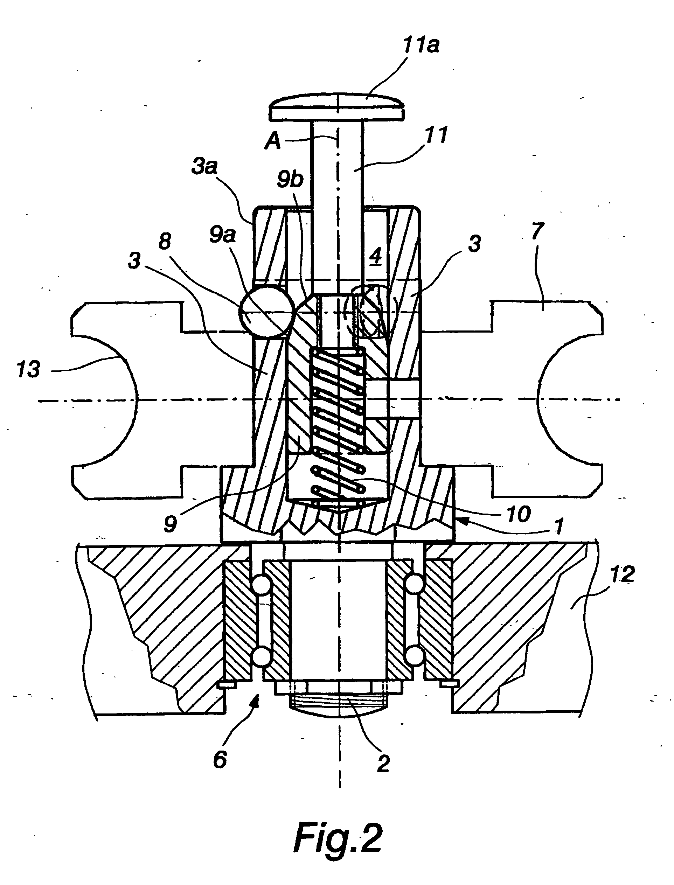

The exemplary embodiment of fig. 2 is only different from fig. 1 in the sense that the spindle 1 is rotatably pivoted to its mounting 12 by means of the bearing 6. Thus, the roller 7 is not provided with a bearing but, instead, it is mounted with its inner track around the rotating spindle 1. In this embodiment, the shaft 3 may also have a cross-sectional shape other than circular. The advantage offered by this embodiment is that the number of required bearings 6 will be fewer, since the number of rollers 7 to be replaced in the straightening or calibrating mechanism will be higher than the number of spindles 1. Another advantage is that mounting of the roller 7 on the spindle 1 is not dependent on the dimensions of an employed bearing. This applies both to radial and axial dimensioning. This facilitates particularly the use of rollers provided with multiple circular grooves, whereby, after turning the rollers, the various circular grooves can be brought to coincide with the same pipe or shaft drawing line. With bearing-fitted rollers the availability of this possibility is highly limited.

The invention is not limited to the foregoing exemplary embodiment. For example, the balls 8 can be cylindrical or conical in shape, nor is the motion of the pusher 9 restricted to an axial movement as it can also perform a circular motion or a combination of axial and circular motion. The spring 10 may also find several variations regarding its location and configuration. Instead of a mechanical spring it is viable to use e.g. a pneumatic or hydraulic power unit, wherein a pressure medium is adapted to be supplied along a passage extending from the mounting 12 through the spindle 1 into the cylindrical cavity 4 behind the piston type pusher 9. In a preferred embodiment of the invention, no components of the clamping mechanism are removed from the spindle or the mechanism for the duration of a replacement process. However, it is possible that the connection of the plunger 11 with the end of the pusher 9 is implemented by some other means than a permanently intended threaded joint, e.g. by means of a bayonet type quick release coupling or just a pin/socket fitting, whereby one and the same plunger can be used for a variety of spindles. What is essential is that the clamping be implemented by means of a spring or some other power unit and the damping be released manually for accomplishing the object of the invention.

## Claims

1. A mounting and dismounting mechanism for a straightening or calibrating roller (7) rotatable about a spindle (1) and provided with a circular groove (13), comprising at least one holder element (8), the roller (7) being adapted to be mountable and clampable by means of the holder element (8) around the spindle (1), and to be dismountable and removable from around the spindle (1) co-directionally with a longitudinal axis (A) of the spindle (1), **characterized in that** the spindle (1) is formed with a cylindrical cavity (4), having its wall (3) provided with an opening, the holder element (8) being adapted to move therein between clamping and release positions thereof, respectively protruding and not protruding from the outer surface of the spindle, that the cavity (4) is provided with a pusher (9) adapted to be movable between clamping and release positions thereof, and said pusher (9) being formed with a thrust face (9a, 9b) for the holder element (8), and a power unit (10) forcing the pusher (9) to shift from its release position to its clamping position, the thrust face (9a, 9b) of the pusher (9) using the force of the power unit (10) to move the holder element (8) from its release position to its clamping position, and that the pusher (9) is associated with a plunger (11), whereby the pusher (9) is movable against the force of the power unit (10) from its clamping position to its release position, the holder element (8) being thus capable of shifting from its clamping position to its release position.

2. A mechanism as set forth in claim 1, **characterized in that** the pusher (9) has its clamping position and release position axially spaced from each other, and that the thrust face (9a, 9b) is at an acute angle relative to the longitudinal axis (A) of the spindle (1).

3. A mechanism as set forth in claim 1 or 2, **characterized in that** the spindle (1) comprises a stationary spindle and the roller (7) is provided with a bearing (6).

4. A mechanism as set forth in any of claims 1-3, **characterized in that** the spindle (1) comprises a rotatably pivoted spindle.

5. A mechanism as set forth in any of claims 1-4, **characterized in that** the spindle (1) has its end provided with a reduced diameter spindle extension (3a) for giving the roller (7) a preliminary alignment and, hence, for guiding the inner track of the bearing (6) or the roller (7) smoothly around the spindle (1).

6. A mechanism as set forth in any of claims 1-5, **characterized in that** the plunger (11) comprises a push rod, extending from the cavity (4) and having its end provided with an extension (11a) having a diameter which is smaller than the inner diameter of the bearing (6).

7. A mechanism as set forth in any of claims 2-6, **characterized in that** the acute angle between the thrust face (9a, 9b) and the longitudinal axis (A) increases towards the distal end of the pusher (9), and that the thrust face section (9a) having a smaller angle bears against the holder element (8) in the clamping position of the latter.

8. A mechanism as set forth in any of daims 1-4, **characterized in that** the holder element (8) comprises a ball.

9. A mechanism as set forth in any of daims 1-8, **characterized in that** the number of holder elements (8) and complementary openings in the wall (3) of the cavity (4) is more than one, preferably three, spaced from each other by an angular distance.

10. A mechanism as set forth in any of claims 1-9, **characterized in that** the power unit (10) comprises a mechanical spring, a section of its length being fitted in a cavity established within the pusher (9).

11. A mechanism as set forth in any of claims 1-10, **characterized in that** the cavity (4) is cylindrical and the pusher (9) comprises a piston type element.

12. A mechanism as set forth in any of claims 1-11, **characterized in that** none of its components need be removed from the mechanism for the process of replacing the rollers (7) and the bearing (6).

## Patentansprüche

1. Befestigungs- und Demontierungsmechanismus für eine um eine Spindel (1) drehbare und mit einer kreisförmigen Rille (13) versehene Richt- oder Kalibrierrolle (7), umfassend zumindest ein Halterelement (8), wobei die Rolle (7) angepasst ist, mittels des Halterelements (8) rund um die Spindel (1) montierbar und einspannbar zu sein, und von rundum der Spindel (1) kodirektional mit einer Längsachse (A) der Spindel (1) demontierbar und entfernbar zu sein,
**dadurch gekennzeichnet,**
**dass** die Spindel (1) mit einer zylindrischen Kavität (4) gestaltet ist, wobei deren Wand (3) mit einer Öffnung versehen ist, dass das Halterelement (8) angepasst ist, sich darin zwischen dessen Einspann- und Auslöseposition zu bewegen, jeweils von der Außenfläche der Spindel hervorstehend und nicht hervorstehend, dass die Kavität (4) mit einer Schubvorrichtung (9) versehen ist, die angepasst ist, zwischen deren Einspann- und Auslöseposition bewegbar zu sein, und die Schubvorrichtung (9) gestaltet ist mit einer Druckseite (9a, 9b) für das Halterelement (8) und einer die Schubvorrichtung (9) von ihrer Auslöseposition in ihre Einspannposition verstellenden Energieeinheit (10), wobei die Druckseite (9a, 9b) der Schubvorrichtung (9) die Kraft der Energieeinheit (10) verwendet, um das Halterelement (8) von seiner Auslöseposition in seine Einspannposition zu bewegen, und dass die Schubvorrichtung (9) verbunden ist mit einem Plunger (11), wobei die Schubvorrichtung (9) gegen die Kraft der Energieeinheit (10) bewegbar ist von ihrer Einspannposition in ihre Auslöseposition, so dass das Halterelement (8) in der Lage ist, von dessen Einspannposition in dessen Auslöseposition verlagert zu werden.

2. Mechanismus nach Anspruch 1,
**dadurch gekennzeichnet,**
**dass** die Einspannposition und die Auslöseposition der Schubvorrichtung (9) axial voneinander getrennt sind und dass die Druckseite (9a, 9b) sich in einem spitzen Winkel relativ zu der Längsachse (A) der Spindel (1) befindet.

3. Mechanismus nach Anspruch 1 oder 2,
**dadurch gekennzeichnet,**
**dass** die Spindel (1) eine ortsfeste Spindel umfasst und die Rolle (7) mit einem Lager (6) versehen ist.

4. Mechanismus nach einem der Ansprüche 1 - 3,
**dadurch gekennzeichnet,**
**dass** die Spindel (1) eine drehbar gelagerte Spindel umfasst.

5. Mechanismus nach einem der Ansprüche 1 - 4,
**dadurch gekennzeichnet,**
**dass** die Spindel (1) an ihrem Ende mit einer Spindelverlängerung reduzierten Durchmessers (3a) versehen ist, um der Rolle (7) eine Vorausrichtung zu geben und somit, um die innere Laufrille des Lagers (6) oder die Rolle (7) reibungslos rund um die Spindel (1) zu führen.

6. Mechanismus nach einem der Ansprüche 1 - 5,
**dadurch gekennzeichnet,**
**dass** der Plunger (11) eine sich von der Kavität (4) erstreckende Stößelstange umfasst, deren Ende mit einer Verlängerung (11a) versehen ist, mit einem Durchmesser, der kleiner ist, als der innere Durchmesser des Lagers (6).

7. Mechanismus nach einem der Ansprüche 2 - 6,
**dadurch gekennzeichnet,**
**dass** der spitze Winkel zwischen der Druckseite (9a, 9b) und der Längsachse (A) ansteigt in Richtung des entfernten Endes der Schubvorrichtung (9), und dass der einen kleineren Winkel aufweisende Druckseitenabschnitt (9a) gegen das Halterelement (8) in der Einspannposition des letzteren lastet.

8. Mechanismus nach einem der Ansprüche 1 - 4,
**dadurch gekennzeichnet,**
**dass** das Halterelement (8) eine Kugel umfasst.

9. Mechanismus nach einem der Ansprüche 1 - 8,
**dadurch gekennzeichnet,**
**dass** die Anzahl der Halterelemente (8) und komplementären Öffnungen in der Wand (3) der Kavität (4) größer als Eins ist, vorzugsweise Drei, voneinander beabstandet durch einen Winkelabstand.

10. Mechanismus nach einem der Ansprüche 1 - 9,
**dadurch gekennzeichnet,**
**dass** die Energieeinheit (10) eine mechanische Feder umfasst, wobei ein Abschnitt ihrer Länge eingepasst ist in eine in der Schubvorrichtung (9) gebildete Kavität.

11. Mechanismus nach einem der Ansprüche 1 - 10,
**dadurch gekennzeichnet,**
**dass** die Kavität (4) zylindrisch ist und die Schubvorrichtung (9) ein Kolbenelement umfasst.

12. Mechanismus nach einem der Ansprüche 1 -11,
**dadurch gekennzeichnet,**
**dass** keins seiner Komponenten von dem Mechanismus entfernt werden muss, um die Rollen (7) und das Lager (6) zu ersetzen.

## Revendications

1. Mécanisme de montage et de démontage pour rouleau dresseur ou calibreur (7) mobile en rotation autour d'un axe (1) et muni d'une gorge ou rainure circulaire (13), comprenant au moins un élément de fixation (8), le rouleau (7) étant conçu pour pouvoir être monté et fixé au moyen de l'élément de fixation (8) autour de l'axe (1), et pour pouvoir être démonté et retiré de l'axe (1) coaxialement à l'axe longitudinal (4) de celui-ci, **caractérisé en ce que** l'axe (1) comporte une cavité cylindrique (4) dont la paroi (3) est munie d'une ouverture, l'élément de fixation (8) étant conçu pour se déplacer dans celle-ci entre ses positions de fixation et de retrait ou libération, respectivement en faisant saillie et en ne faisant pas saillie par rapport à la surface extérieure de l'axe, **en ce que** la cavité (4) est munie d'un poussoir (9) conçu pour être mobile entre ses positions de fixation et de retrait, et ledit poussoir (9) comportant une face de poussée (9a, 9b) pour l'élément de fixation (8), et une unité de puissance ou élément d'entraînement (10) forçant le poussoir (9) à se décaler de sa position de retrait ou libération à sa position de fixation, la face de poussée (9a, 9b) du poussoir (9) utilisant la force de l'unité de puissance (10) pour déplacer l'élément de fixation (8) de sa position de retrait ou libération à sa position de fixation, et **en ce que** le poussoir (9) est associé à un piston (11), grâce auquel il est possible de déplacer le poussoir (9) pour contrer la force exercée par l'unité de puissance (10), de sa position de fixation à sa position de retrait ou libération, l'élément de fixation (8) étant ainsi capable de se décaler de sa position de fixation à sa position de retrait ou libération.

2. Mécanisme selon la revendication 1, **caractérisé en ce que** les positions de fixation et de retrait ou libération du poussoir (9) sont espacées axialement l'une de l'autre, et que la face de poussée (9a, 9b) est positionnée selon un angle aigu par rapport à l'axe longitudinal (A) de l'axe ou broche (1).

3. Mécanisme selon les revendications 1 ou 2, **caractérisé en ce que** l'axe (1) est constitué par un axe fixe et **en ce que** le rouleau (7) est pourvu d'un palier (6).

4. Mécanisme selon l'une des revendications 1 à 3, **caractérisé en ce que** l'axe (1) est constitué par un axe mobile en rotation.

5. Mécanisme selon l'une des revendications 1 à 4, **caractérisé en ce que** l'extrémité de l'axe (1) comporte un prolongement de diamètre réduit (3a) conçu pour assurer un alignement préliminaire du rouleau (7) et, par conséquent, pour guider la bague intérieure du roulement (6) ou du palier (7) autour de l'axe (1).

6. Mécanisme selon l'une des revendications 1 à 5, **caractérisé en ce que** le piston (11) comporte une tige de poussée s'étendant depuis la cavité (4) et dont l'extrémité comporte un prolongement (11a) dont le diamètre est inférieur au diamètre intérieur du palier (6).

7. Mécanisme selon l'une des revendications 2 à 6, **caractérisé en ce** l'angle aigu entre la face de poussée (9a, 9b) et l'axe longitudinal (A) augmente vers l'extrémité distale du poussoir (9), et en ce que la section (9a) de la face de poussée dont l'angle est plus faible repose sur l'élément de fixation (8) dans la position de fixation de ce dernier.

8. Mécanisme selon l'une des revendications 1 à 4, **caractérisé en ce que** l'élément de fixation (8) est constitué par une bille.

9. Mécanisme selon l'une des revendications 1 à 8, **caractérisé en ce qu'**il existe plusieurs éléments de fixation (8) et d'ouvertures complémentaires dans la paroi (3) de la cavité (4), de préférence trois, espacés les uns des autres selon une distance angulaire.

10. Mécanisme selon l'une des revendications 1 à 9, **caractérisé en ce que** l'unité de puissance (10) est constituée par un ressort mécanique, une partie de sa longueur étant insérée dans une cavité réalisée dans le poussoir (9).

11. Mécanisme selon l'une des revendications 1 à 10, **caractérisé en ce que** la cavité (4) est cylindrique et **en ce que** le poussoir (9) comprend un élément de type piston.

12. Mécanisme selon l'une des revendications 1 à 11, **caractérisé en ce qu'**aucun de ses composants n'a besoin d'être retiré du mécanisme lors du processus de remplacement des rouleaux (7) et du palier (6).
